# EUROPÄISCHE PATENTSCHRIFT

(11) **EP 2 689 633 B1**
(45) Veröffentlichungstag und Bekanntmachung des Hinweises auf die Patenterteilung: **09.11.2016**
(21) Anmeldenummer: 12711119.3
(22) Anmeldetag: 01.03.2012
(51) Int. Cl.: H05B 3/84, H05B 1/02

(54) **VERFAHREN UND ANORDNUNG ZUM ENTEISEN EINER TRANSPARENTEN SCHEIBE MIT ELEKTRISCHER HEIZEINRICHTUNG**
METHOD AND ARRANGEMENT FOR DE-ICING A TRANSPARENT WINDOW USING AN ELECTRIC HEATING DEVICE
PROCÉDÉ ET SYSTÈME DE DÉGIVRAGE D'UNE VITRE TRANSPARENTE AU MOYEN D'UN DISPOSITIF DE CHAUFFAGE ÉLECTRIQUE

(30) Priorität: 22.03.2011 EP 11159257
(43) Veröffentlichungstag der Anmeldung: 29.01.2014
(73) Patentinhaber: Saint-Gobain Glass France, 92400 Courbevoie (FR)
(72) Erfinder: LISINSKI, Susanne, Köln 50739 (DE); SCHLARB, Andreas, 52134 Herzogenrath (DE); SCHALL, Günther, 52372 Kreuzau (DE); KLEIN, Marcel, 52499 Baesweiler (DE); FANTON, Xavier, F-93600 Aulnay sous Bois (FR)
(74) Vertreter: Gebauer, Dieter Edmund
(86) Internationale Anmeldenummer: PCT/EP2012/053561
(87) Internationale Veröffentlichungsnummer: WO 2012/126708

(56) Entgegenhaltungen:
- EP-A2- 0 256 690
- WO-A1-2004/110102
- CA-A1- 2 079 175
- DE-A1- 10 313 464

## Beschreibung

Die Erfindung liegt auf dem Gebiet der Fahrzeugtechnik und betrifft ein Verfahren und eine Anordnung zum Enteisen einer transparenten Scheibe mit einer elektrischen Heizeinrichtung.

Transparente Scheiben mit einer elektrischen Heizschicht sind als solche wohlbekannt und bereits vielfach in der Patentliteratur beschrieben worden. Lediglich beispielhaft sei diesbezüglich auf die deutschen Offenlegungsschriften DE 10 2007 05286, DE 10 2008 018147 A1 und DE 10 2008 029986 A1 verwiesen. In Kraftfahrzeugen werden sie häufig als Windschutzscheiben eingesetzt, da das zentrale Sichtfeld aufgrund gesetzlicher Vorgaben keine wesentlichen Sichteinschränkungen aufweisen darf. Durch die von der Heizschicht erzeugte Wärme können binnen kurzer Zeit kondensierte Feuchtigkeit, Eis und Schnee entfernt werden.

Der Heizstrom wird in der Regel durch mindestens ein Paar streifenförmiger Elektroden ("Busbars") in die Heizschicht eingeleitet, welche als Sammelleiter den Heizstrom auf breiter Front verteilen. Der Schichtwiderstand der Heizschicht ist bei den zurzeit in der industriellen Serienfertigung eingesetzten Materialien relativ hoch und liegt in der Größenordnung von einigen Ohm. Um dennoch eine für die praktische Anwendung genügende Heizleistung zu erzielen, muss die Heizspannung entsprechend hoch sein, wobei in brennkraftgetriebenen Kraftfahrzeugen zurzeit standardmäßig eine Bordspannung von 12 bis 24 Volt zur Verfügung steht.

Die kanadische Patentanmeldung CA 2,079,175 zeigt ein Verfahren zum elektrischen Heizen einer Scheibe, bei welcher eine Speisespannung angelegt wird, wenn eine bestimmte Scheibentemperatur unterschritten wird. Die Dauer der Heizperioden ist einstellbar in Abhängigkeit der Scheibentemperatur vor Beginn der Scheibenbeheizung. Die Scheibe wird dann solange geheizt, bis eine vorgegebene Scheibentemperatur überschritten wird. Die durch Heizen zu erreichende Scheibentemperatur ist nicht beschränkt.

Die europäische Patentanmeldung EP 0256 690 zeigt ein Verfahren zum elektrischen Heizen einer Scheibe mit verschiedenen Speisespannungen, wobei zum Enteisen eine höhere Speisespannung und zum Beschlagentfernen eine niedrigere Speisespannung eingesetzt wird. Bei einer kritischen Scheibentemperatur wird die Scheibenheizung abgeschaltet.

Die deutsche Patentanmeldung DE 10313464 A1 lehrt ein Verfahren zur Scheibenheizung, bei dem die einer Heckscheibenheizung zugeführte elektrische Energie in Abhängigkeit der Scheibentemperatur eingestellt wird. Bei Erreichen eines Schwellwerts für die Heckscheibentemperatur wird die Scheibenheizung abgeschaltet.

Demgegenüber besteht die Aufgabe der vorliegenden Erfindung darin, herkömmliche Verfahren zum Enteisen transparenter Scheiben mit elektrischer Heizeinrichtung in vorteilhafter Weise weiterzubilden. Diese und weitere Aufgaben werden nach dem Vorschlag der Erfindung durch ein Verfahren und eine Anordnung mit den Merkmalen der nebengeordneten Patentansprüche gelöst. Vorteilhafte Ausgestaltungen der Erfindung sind durch die Merkmale der Unteransprüche angegeben.

Erfindungsgemäß sind eine Anordnung und ein Verfahren zum Enteisen einer transparenten Scheibe, insbesondere Fahrzeug-Windschutzscheibe, mit einer elektrischen Heizeinrichtung gezeigt.

Die erfindungsgemäße (Scheiben-)Anordnung umfasst eine transparente Scheibe mit einer elektrischen Heizeinrichtung, die in vielfältiger Weise ausgestaltet sein kann, beispielsweise in Form von dünnen Heizdrähten, die als Linienheizelemente dienen. Vorzugsweise, jedoch nicht zwingend, handelt es sich bei der elektrischen Heizeinrichtung um eine transparente elektrische Heizschicht (Flächenheizung), die sich zumindest über einen wesentlichen Teil der Scheibenfläche, insbesondere über deren zentrales Sichtfeld, erstreckt. Die Heizeinrichtung ist durch elektrische Anschlussmittel mit einer Spannungsversorgungseinrichtung zum Bereitstellen einer Speise- bzw. Heizspannung elektrisch verbindbar bzw. verbunden. Im Falle einer elektrischen Heizschicht umfassen die Anschlussmittel wenigstens zwei Anschlusselektroden, die zum Einleiten des Heizstroms in die Heizschicht dienen und mit der Heizschicht elektrisch so verbunden sind, dass nach Anlegen der Speisespannung ein Heizstrom über ein von der Heizschicht gebildetes Heizfeld fließt. Die Anschlusselektroden können beispielsweise in Form von Streifen- bzw. Bandelektroden ausgebildet sein, um den Heizstrom als Sammelleiter breit verteilt in die Heizschicht einzuleiten. Im Vergleich zur hochohmigen Heizschicht haben die Anschlusselektroden einen relativ geringen bzw. niederohmigen elektrischen Widerstand.

Die Anordnung umfasst weiterhin zumindest einen Temperatursensor, welcher so angeordnet und ausgebildet ist, dass er die Temperatur der transparenten Scheibe messen kann, sowie eine mit dem Temperatursensor und der Spannungsversorgungseinrichtung gekoppelte elektronische Steuereinrichtung, welche zur Durchführung des erfindungsgemäßen Verfahrens (programmtechnisch) geeignet eingerichtet ist. Durch Steuereinrichtung, Spannungsversorgungseinrichtung und Temperatursensor wird ein Steuer- bzw. Regelkreis zur Erwärmung der Scheibe gebildet. Vorteilhaft sind eine Mehrzahl Temperatursensoren verteilt an der Scheibe angeordnet, um lokale Temperaturinhomogenitäten der Scheibe erfassen zu können.

Die Temperatursensoren sind vorteilhaft im Randbereich der Scheibe angeordnet, insbesondere über den Randbereich der Scheibe verteilt, da dort in der Regel größere temperaturbedingte Spannungen auftreten, so dass das Bruchrisiko der Scheibe erhöht ist. Vorteilhaft sind die Temperatursensoren in Form gedruckter Leiter- bzw. Messschleifen ausgebildet, die insbesondere im Druckverfahren, beispielsweise aus dem gleichen Material wie die Sammelleiter, hergestellt sind.

Das erfindungsgemäße Verfahren wird auf Basis eines manuell oder automatisch aktivierten Enteisungsvorgangs durchgeführt, wobei der Enteisungsvorgang beispielsweise durch ein Startsignal aktiviert wird. Das Startsignal kann manuell durch eine Bedienperson, beispielsweise durch Drücken auf ein Schaltelement, oder selbsttätig, beispielsweise nach Anlassen des Fahrzeugs wenn bestimmte Bedingungen wie niedrige Außentemperaturen unterhalb von 0°C vorliegen, generiert werden. Es versteht sich, dass das erfindungsgemäße Verfahren einen Schritt zum Starten des Enteisungsvorgangs, insbesondere durch Generieren eines Startsignals, umfassen kann. Im Folgenden erfolgt eine Beschreibung der zum Enteisen der Scheibe durchgeführten Verfahrensschritte bei bereits gestartetem Enteisungsvorgang.

Das erfindungsgemäße Verfahren umfasst einen Verfahrensschritt (Schritt A), in dem die Scheibentemperatur vor dem erstmaligen Anlegen einer Heizspannung an die Heizvorrichtung gemessen wird. Dabei wird der Enteisungsvorgang ohne Anlegen einer Heizspannung beendet, falls die in Schritt A) gemessene Scheibentemperatur einen wählbaren unteren Temperaturschwellwert übersteigt. Die Anordnung geht dann selbsttätig in einen Standby- bzw. Ruhezustand über. Alternativ, für den Fall, dass die in Schritt A) gemessene Scheibentemperatur gleich zu oder geringer als der untere Temperaturschwellwert ist, wird eine Heizspannung wählbarer Größe an die Heizeinrichtung zum Heizen bzw. Enteisen der Scheibe während einer Heizperiode wählbarer Dauer angelegt. Im letztgenannten Fall wird zudem der im Folgenden beschriebene Schritt B) ausgeführt.

Das erfindungsgemäße Verfahren umfasst einen weiteren Verfahrensschritt (Schritt B), in dem die Scheibentemperatur nach Beginn der Heizperiode gemessen wird. Insbesondere wird die Scheibentemperatur mit Beginn der Heizperiode gemessen, beispielsweise in festlegbaren Zeitabständen, vorteilhaft kontinuierlich während der Heizperiode. Alternativ wird die Scheibentemperatur nach Ablauf einer Wartezeit wählbarer Dauer nach Beginn der Heizperiode, d.h. nach Anlegen der Heizspannung, gemessen. Die Wartezeit kann noch während der Heizperiode enden. Alternativ kann die Wartezeit mit der Heizperiode oder nach Ablauf der Heizperiode enden. In Schritt B) wird der Enteisungsvorgang beendet, falls die Scheibentemperatur einen wählbaren oberen Temperaturschwellwert erreicht. Die Anordnung geht dann selbsttätig in den Standby- bzw. Ruhezustand über. Falls eine Wartezeit zum Messen der Scheibentemperatur vorgesehen ist und die Wartezeit während der Heizperiode endet, wird zu diesem Zweck die Heizspannung abgeschaltet oder die Heizspannung von der Heizeinrichtung getrennt. Falls die Wartezeit mit oder nach Ablauf der Heizperiode endet, wird keine weitere Heizspannung mehr an die Heizeinrichtung angelegt. Alternativ, für den Fall, dass die Scheibentemperatur geringer als der obere Temperaturschwellwert ist, wird der Enteisungsvorgang fortgesetzt, wobei der im Folgenden beschriebene Schritt C) ausgeführt wird.

Das erfindungsgemäße Verfahren umfasst einen weiteren Verfahrensschritt (Schritt C), in dem eine Heizspannung wählbarer Größe an die Heizeinrichtung während einer Heizperiode wählbarer Dauer angelegt wird. Zudem wird Schritt B) wiederholt.

In den erfindungsgemäßen Verfahren ist die Heizspannung in Schritt A) und in Schritt C) größer als 100 Volt und die Heizperiode beträgt maximal 2 Minuten, insbesondere maximal 90 Sekunden, und liegt beispielsweise im Bereich von 30 bis 90 Sekunden. Wie Versuche der Anmelderin gezeigt haben, kann hierdurch beispielsweise bei Fahrzeug-Windschutzscheiben eine Enteisung mit besonders niedriger elektrischer Verlustleistung zuverlässig und sicher erreicht werden kann. Grund hierfür ist eine verringerte Dissipation von Energie durch ein schnelleres Aufheizen der Scheibe, welche - wie sich in überraschender Weise gezeigt hat - durch die höhere elektrisch Leistung nicht kompensiert wird. Im Hinblick auf eine besonders niedrige elektrische Verlustleistung werden Heizspannung und Heizperiode so gewählt, dass eine Heizleistung von wenigstens 2 Kilowatt (kW) pro Quadratmeter (m²) Scheibenfläche, vorzugsweise wenigstens 3 kW pro m² Scheibenfläche, erzeugt wird. In Verbindung mit der Tatsache, dass eine Scheibenheizung verhindert wird, wenn die Scheibentemperatur einen unteren Temperaturschwellwert übersteigt, so dass eine unnötige Scheibenheizung vermieden wird, kann die Belastung eines Energiespeichers zur Speisung der Heizeinrichtung in vorteilhafter Weise weiter vermindert werden.

Durch das erfindungsgemäße Verfahren kann eine wirkungsvolle Enteisung der transparenten Scheibe erreicht werden, wobei gleichzeitig eine Erwärmung der Scheibe über den wählbaren oberen Temperaturschwellwert zuverlässig und sicher vermieden wird. Je nach Wahl des oberen Temperaturschwellwerts ermöglicht dies in vorteilhafter Weise, dass ein Brechen der Scheibe oder von Anschlusselementen, wie Löt- und Klebverbindungen, aufgrund großer Temperaturwechsel verhindert wird. Eine thermisch bedingte Schädigung der Scheibe durch den Enteisungsvorgang kann somit verhindert werden. Andererseits kann bei einem entsprechend niedrigen oberen Temperaturschwellwert vermieden werden, dass sich eine Person verbrennt, wenn die erwärmte Scheibe absichtlich oder versehentlich berührt wird. Dies gilt in besonderem Maße für das erfindungsgemäße Verfahren, in dem eine relativ hohe Heizspannung von mehr als 100 Volt für eine relativ kurze Zeitperiode von 1 bis 120 Sekunden, insbesondere 30 bis 60 Sekunden, angelegt wird, wodurch zwar eine schnelle Enteisung der Scheibe mit besonders geringer Verlustleistung erreicht werden kann, jedoch auch die Gefahr von Verbrennungen sowie einer thermischen Schädigung der Scheibe besteht, falls die Scheibentemperatur nicht geeignet begrenzt wird.

In dem erfindungsgemäßen Verfahren wird vorteilhaft eine Mehrzahl (wenigstens zwei) Heizperioden durchgeführt, d.h. es sind ein oder mehrere Schritte C) vorgesehen, so dass ein "gepulstes" Heizen der Scheibe erfolgt. Durch diese Maßnahme kann die Scheibe in vorteilhafter Weise mit einer besonders geringen elektrischen Verlustleistung geheizt werden.

In dem erfindungsgemäßen Verfahren können die Heizperioden in Schritt A) und Schritt C) gleich lang sein oder eine voneinander verschiedene Dauer haben. Gleichermaßen können die während der Heizperioden in Schritt A) und Schritt C) angelegten Heizspannungen gleich groß sein oder voneinander verschiedene Spannungswerte haben. Bei einer in steuer- bzw. regelungstechnischer Hinsicht besonders einfachen Ausgestaltung des erfindungsgemäßen Verfahrens sind in Schritt A) und Schritt C) die Heizperioden gleich lang und die an die Heizeinrichtung angelegten Heizspannungen gleich groß.

Erfindungsgemäß wird in Schritt A) die Dauer der Heizperiode in Abhängigkeit der in Schritt A) gemessenen Scheibentemperatur gewählt, wobei bei einer höheren Scheibentemperatur eine kürzere Heizperiode und bei einer niedrigeren Scheibentemperatur eine längere Heizperiode gewählt wird. Diese Maßnahme ermöglicht in vorteilhafter Weise eine Anpassung der Dauer der Heizperiode in Schritt A) an die äußere Umgebungstemperatur, welche in der Regel zumindest annähernd der Scheibentemperatur vor erstmaligem Anlegen einer Heizspannung entspricht und somit typischer Weise auch ein Maß für den Vereisungsgrad der transparenten Scheibe darstellt, so dass eine vollständige Enteisung der Scheibe auch bei starker Vereisung zuverlässig und sicher erreicht werden kann.

Erfindungsgemäß wird in Schritt C) die Dauer der Heizperiode in Abhängigkeit der in Schritt B) gemessenen Scheibentemperatur gewählt, wobei bei einer höheren Scheibentemperatur eine kürzere Heizperiode und bei einer niedrigeren Scheibentemperatur eine längere Heizperiode gewählt wird. Diese Maßnahme ermöglicht in vorteilhafter Weise eine Anpassung der Dauer der Heizperiode in Schritt C) an die bereits erreichte Erwärmung der Scheibe, so dass aufgrund einer verringerten oder erhöhten Wärmezufuhr die Betriebssicherheit der Scheibe noch weiter verbessert werden kann. Zudem kann die zum Enteisen eingesetzte Wärmeleistung besser dosiert werden, wodurch elektrische Energie eingespart werden kann.

In den beiden unmittelbar vorstehend genannten Ausgestaltungen des Verfahrens kann in Verbindung mit einer relativ hohen Speisespannung von mehr als 100 Volt und einer relativ kurzen Heizperiode von maximal 2 Minuten, insbesondere maximal 90 Sekunden, wodurch eine geringe elektrische Verlustleistung erzielt wird, in besonders vorteilhafter Weise eine weitere Verringerung der Belastung des Energiespeichers zur Speisung der Heizeinrichtung erreicht werden.

Bei einer weiteren vorteilhaften Ausgestaltung des erfindungsgemäßen Verfahrens wird in Schritt A) die Größe der Heizspannung in Abhängigkeit der in Schritt A) gemessenen Scheibentemperatur gewählt, wobei bei einer höheren Scheibentemperatur eine niedrigere Heizspannung und bei einer niedrigeren Scheibentemperatur eine höhere Heizspannung gewählt wird. Diese Maßnahme ermöglicht in vorteilhafter Weise eine Anpassung der Heizspannung in Schritt A) an die äußere Umgebungstemperatur, so dass die zugeführte Wärmeleistung gezielt eingestellt und die zum Enteisen verbrauchte elektrische Energie reduziert werden kann.

Bei einer weiteren vorteilhaften Ausgestaltung des erfindungsgemäßen Verfahrens wird in Schritt C) die Größe der Heizspannung in Abhängigkeit der in Schritt B) gemessenen Scheibentemperatur gewählt, wobei bei einer höheren Scheibentemperatur eine niedrigere Heizspannung und bei einer niedrigeren Scheibentemperatur eine höhere Heizspannung gewählt wird. Diese Maßnahme ermöglicht in vorteilhafter Weise eine Anpassung der Heizspannung an die bereits erreichte Erwärmung der Scheibe, so dass die Betriebssicherheit der Scheibe noch weiter verbessert werden kann. Zudem kann die zum Enteisen eingesetzte Wärmeleistung besser dosiert werden, wodurch elektrische Energie eingespart werden kann.

In den beiden unmittelbar vorstehend genannten Ausgestaltungen des Verfahrens kann in Verbindung mit einer relativ hohen Speisespannung von mehr als 100 Volt und einer relativ kurzen Heizperiode von maximal 2 Minuten, insbesondere maximal 90 Sekunden, wodurch eine geringe elektrische Verlustleistung erzielt wird, in besonders vorteilhafter Weise eine weitere Verringerung der Belastung des Energiespeichers zur Speisung der Heizeinrichtung erreicht werden. In Verbindung mit den Ausgestaltungen, wonach in Schritt A) und/oder in Schritt C) die Dauer der Heizperiode in Abhängigkeit der Scheibentemperatur gewählt wird, kann eine noch weitere Verringerung der Belastung des Energiespeichers zur Speisung der Heizeinrichtung erreicht werden.

Wie bereits weiter oben ausgeführt, wird in Schritt B) die Scheibentemperatur beispielsweise nach Ablauf einer Wartezeit nach Beginn der Heizperiode gemessen. Vorteilhaft wird die Scheibentemperatur dabei unmittelbar nach Ablauf der Heizperiode gemessen, so dass für den Fall, dass die Scheibe weiter erwärmt wird, die Enteisung der Scheibe mit besonders hoher Effizienz erfolgen kann.

In dem erfindungsgemäßen Verfahren ist es für die Praxis vorteilhaft, wenn als unterer Temperaturschwellwert 0°C gewählt wird, so dass nur dann ein Enteisungsvorgang durchgeführt wird, wenn die äußere Umgebung keine Tautemperatur aufweist. Weiterhin ist es von Vorteil, wenn der obere Temperaturschwellwert im Bereich von 30°C bis 80°C, vorzugsweise im Bereich von 50°C bis 70°C, liegt und beispielsweise 70°C beträgt. Hierdurch kann einerseits eine schnelle Enteisung mit geringer elektrischer Verlustleistung erreicht werden. Andererseits kann ein Brechen der Scheibe beim Enteisen, sowie das Verbrennen eines Körperteils beim Berühren der Scheibe zuverlässig und sicher vermieden werden.

Ferner erstreckt sich die Erfindung auf eine Scheibenanordnung mit einer transparenten Scheibe, insbesondere eine Fahrzeug-Windschutzscheibe, mit einer elektrischen Heizeinrichtung, insbesondere eine Heizschicht, die mit zumindest zwei Elektroden zum Anschluss an eine Spannungsversorgungseinrichtung so verbunden ist, dass durch Anlegen einer Heizspannung ein Heizstrom durch die Heizeinrichtung fließt. Sie umfasst des Weiteren wenigstens einen Temperatursensor zum Messen der Scheibentemperatur, sowie eine mit dem Temperatursensor und der Spannungsversorgungseinrichtung gekoppelten Kontrolleinrichtung, welche zur Durchführung eines wie oben beschriebenen Verfahrens geeignet eingerichtet ist.

Bei einer vorteilhaften Ausgestaltung der Scheibenanordnung sind die Elektroden und der wenigstens eine Temperatursensor, der insbesondere aus dem gleichen Material wie die Elektroden bestehen kann, auf die in Form einer Heizschicht ausgebildete Heizeinrichtung im Druckverfahren aufgedruckt. Durch diese Maßnahme kann der wenigstens eine Temperatursensor in besonders einfacher und kostengünstiger Weise in der Serienfertigung herstellt werden. Der wenigstens eine Temperatursensor ist beispielsweise in Form einer Leiter- bzw. Messschleife ausgebildet.

Bei einer weiteren vorteilhaften Ausgestaltung der Scheibenanordnung ist eine Mehrzahl Temperatursensoren vorgesehen, die über den umlaufenden Scheibenrand bzw. Randbereich der Scheibe verteilt, vorzugsweise gleichmäßig verteilt, angeordnet sind, so dass Temperaturänderungen im besonders bruchempfindlichen Randbereich der Scheibe erfasst werden können.

Bei einer weiteren vorteilhaften Ausgestaltung der Scheibenanordnung ist in Scheibenbereichen, in denen eine lokale Überhitzung auftreten kann, beispielsweise Endabschnitte von Trennlinien oder heizschichtfreie Zonen, jeweils ein Temperatursensor angeordnet, so dass Temperaturänderungen in diesen besonders bruchempfindlichen Bereichen der Scheibe erfasst werden können.

Des Weiteren erstreckt sich die Erfindung auf die Verwendung einer wie oben beschriebenen Scheibe der erfindungsgemäßen Anordnung als funktionales Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen, vorzugsweise in Elektrofahrzeugen, insbesondere als Windschutzscheibe, Heckscheibe, Seitenscheibe und/oder Glasdach.

Es versteht sich, dass die verschiedenen Ausgestaltungen einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Fig. 1: eine schematische Ansicht eines Ausführungsbeispiels der erfindungsgemäßen Anordnung mit einer Kraftfahrzeug-Windschutzscheibe;
- Fig. 2: eine schematische Querschnittsdarstellung der Fahrzeug-Windschutzscheibe von Fig. 1;
- Fig. 3: ein Ablaufdiagramm eines Ausführungsbeispiels des erfindungsgemäßen Verfahrens zur Enteisung der Fahrzeug-Windschutzscheibe von Fig. 1.

### Ausführliche Beschreibung der Zeichnungen

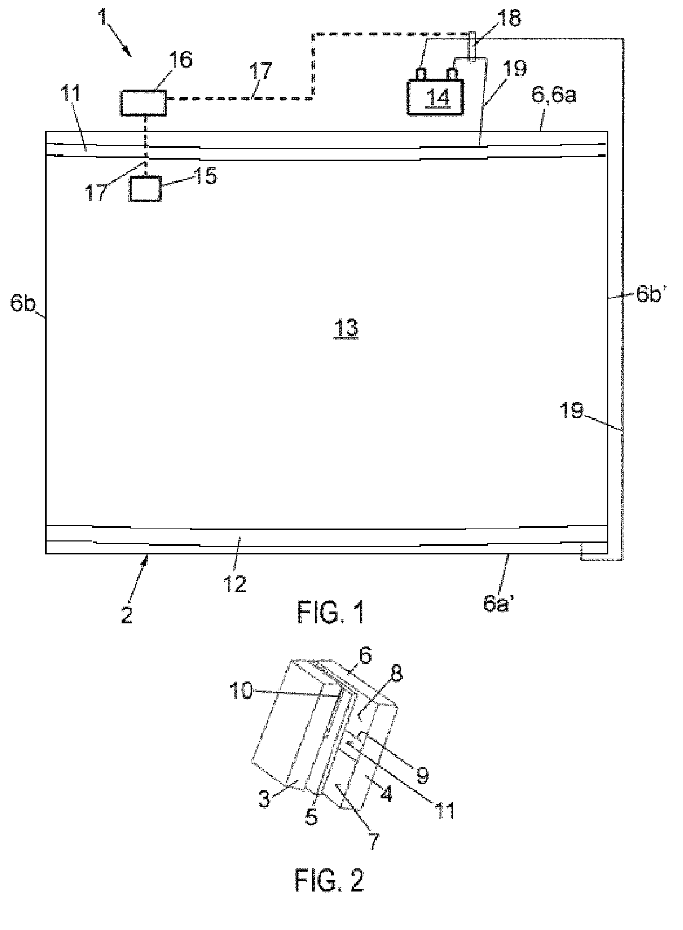

Seien zunächst Fig. 1 und 2 betrachtet, worin eine insgesamt mit der Bezugszahl 1 bezeichnete erfindungsgemäße Scheibenanordnung veranschaulicht ist. Die Scheibenanordnung 1 umfasst eine transparente Windschutzscheibe 2 eines Kraftfahrzeugs, vorzugsweise eines Elektrofahrzeugs, die hier beispielsweise als Verbundscheibe ausgebildet ist.

Wie der Querschnittsdarstellung von Fig. 2 entnommen werden kann, verfügt die Windschutzscheibe 2 über eine starre Außenscheibe 3 und eine starre Innenscheibe 4, die beide als Einzelscheiben ausgebildet und über eine thermoplastische Klebeschicht 5 fest miteinander verbunden sind. Die beiden Einzelscheiben 3, 4 sind annähernd von gleicher Größe, haben in etwa eine trapezförmig geschwungene Kontur, wobei es sich versteht, dass die Erfindung hierauf nicht eingeschränkt ist, sondern dass die Windschutzscheibe 2 auch jede andere für die praktische Anwendung geeignete Form haben kann. Die beiden Einzelscheiben 3, 4 sind aus einem gläsernen Material, wie Floatglas, Gussglas oder Keramikglas oder einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephtalat (PET) gefertigt. Allgemein kann jedes Material mit ausreichender chemischer Beständigkeit, geeigneter Form- und Größenstabilität, sowie hinreichender optischer Transparenz verwendet werden. Als Klebeschicht 5 zur Verbindung der beiden Einzelscheiben 3, 4 kann beispielsweise Kunststoff, insbesondere auf Basis von Polyvinylbutyral (PVB), Ethylen-Vinyl-Acetat (EVA) und Polyurethan (PU), eingesetzt werden. Für eine andere Anwendung wie als Windschutzscheibe wäre es auch möglich, die beiden Einzelscheiben 3, 4 aus einem flexiblen Material herzustellen.

Die Kontur der Windschutzscheibe 2 ist durch einen umlaufenden Scheibenrand 6 gegeben, der sich entsprechend der trapezartigen Form aus zwei langen Scheibenrändern 6a, 6a' (in Einbaulage oben und unten) und zwei kurzen Scheibenränder 6b, 6b' (in Einbaulage links und rechts) zusammensetzt.

Auf der mit der Klebeschicht 5 verbundenen Seite der Innenscheibe 4 ("Seite 3 ") ist eine transparente, für eine elektrische Beheizung der Windschutzscheibe 2 dienende Heizschicht 7 abgeschieden. Die Heizschicht 7 ist im Wesentlichen vollflächig auf die Innenscheibe 4 aufgebracht, wobei ein allseitig umlaufender Randstreifen 8 der Innenscheibe 4 nicht beschichtet ist, so dass ein Heizschichtrand 9 gegenüber dem Scheibenrand 6 nach innen zurückversetzt ist. Diese Maßnahme dient einer elektrischen Isolierung der Heizschicht 7 nach außen. Zudem wird die Heizschicht 7 gegen vom Scheibenrand 6 vordringende Korrosion geschützt. Ebenso wäre es möglich, die Heizschicht 7 nicht auf die Innenscheibe 4, sondern auf einen flächenhaften Träger aufzubringen, der anschließend mit den Einzelscheiben 3, 4 verklebt wird. Bei einem solchen Träger kann es sich insbesondere um eine Kunststofffolie handeln, die beispielsweise aus Polyamid (PA), Polyurethan (PU), Polyvinylchlorid (PVC), Polycarbonat (PC), Polyester (PE) oder Polyvinylbutyral (PVB) besteht.

Die Heizschicht 7 enthält ein elektrisch leitfähiges Material. Beispiele hierfür sind Metalle mit einer hohen elektrischen Leitfähigkeit wie Silber, Kupfer, Gold, Aluminium oder Molybdän, Metall-Legierungen wie mit Palladium legiertes Silber, sowie transparente, leitfähige Oxide (TCO = Transparent Conductive Oxides). Bei TCO handelt es sich vorzugsweise um Indiumzinnoxid, fluordotiertes Zinndioxid, aluminiumdotierts Zinndioxid, galliumdotiertes Zinndioxid, bordotiertes Zinndioxid, Zinnzinkoxid oder antimondotiertes Zinnoxid. Dabei kann die Heizschicht 7 aus einer leitfähigen Einzelschicht oder einem Schichtenaufbau, der zumindest eine leitfähige Teilschicht enthält, bestehen. Beispielsweise umfasst ein solcher Schichtenaufbau mindestens eine leitfähige Teilschicht, vorzugsweise Silber (Ag), und weitere Teilschichten wie Entspiegelungs- und Blockerschichten.

Die Dicke der Heizschicht 7 kann breit variieren, wobei die Dicke an jeder Stelle beispielsweise im Bereich von 30 nm bis 100 µm liegt. Im Falle von TCO liegt die Dicke beispielsweise im Bereich von 100 nm bis 1,5 µm, bevorzugt im Bereich von 150 nm bis 1 µm und stärker bevorzugt im Bereich von 200 nm bis 500 nm. Vorteilhaft ist die Heizschicht 7 thermisch hoch belastbar, so dass sie die zum Biegen von Glas erforderlichen Temperaturen von typischer Weise mehr als 600°C ohne Funktionsbeeinträchtigung übersteht. Gleichermaßen kann aber auch eine thermisch gering belastbare Heizschicht 7 vorgesehen sein kann, die nach dem Biegen der Glasscheibe aufgebracht wird. Der Schichtwiderstand der Heizschicht 7 ist vorzugsweise geringer als 20 Ohm und liegt beispielsweise im Bereich von 0,1 bis 20 Ohm. Im gezeigten Ausführungsbeispiel liegt der Schichtwiderstand der Heizschicht 7 beispielsweise im Bereich von 1 bis 5 Ohm.

Die Heizschicht 7 ist beispielsweise aus der Gasphase abgeschieden, zu welchem Zweck an sich bekannte Verfahren wie chemische Gasphasenabscheidung (CVD = Chemical Vapor Deposition) oder physikalische Gasphasenabscheidung (PVD = Physical Vapor Deposition) eingesetzt werden können. Vorzugsweise wird die Heizschicht 7 durch Sputtern (Magnetron-Kathodenzerstäubung) abgeschieden.

Die Windschutzscheibe 2 muss hinreichend transparent für sichtbares Licht im Wellenlängenbereich von 350 nm bis 800 nm sein, wobei unter dem Begriff "Transparenz" eine Lichtdurchlässigkeit von beispielsweise mehr als 80% zu verstehen ist. Dies kann insbesondere durch Einzelscheiben 3, 4 aus Glas und eine transparente Heizschicht 7 aus Silber (Ag) erreicht werden.

Die der Innenscheibe 4 zugewandte Oberfläche der Außenscheibe 3 ist mit einer opaken Farbschicht versehen, die einen am Scheibenrand 6 rahmenförmig umlaufenden Maskierungsstreifen 10 bildet. Der Maskierungsstreifen 10 besteht beispielsweise aus einem elektrisch isolierenden, schwarz eingefärbten Material, das in die Außenscheibe 3 eingebrannt ist. Der Maskierungsstreifen 10 verhindert einerseits die Sicht auf einen Klebestrang (nicht gezeigt), mit dem die Windschutzscheibe 2 in die Fahrzeugkarosserie eingeklebt wird, andererseits dient er als UV-Schutz für das verwendete Klebematerial. Weiterhin bestimmt der Maskierungsstreifen 10 das Sichtfeld der Windschutzscheibe 2. Eine weitere Funktion des Maskierungsstreifens 10 ist eine Kaschierung der beiden Sammelleiter 11, 12 so dass diese von außen nicht erkennbar sind.

Die Heizschicht 7 ist mit einem ersten Sammelleiter 11 und einem zweiten Sammelleiter 12 elektrisch verbunden. Die beiden Sammelleiter 11, 12 sind jeweils band- bzw. streifenförmig ausgebildet und dienen als Anschlusselektroden zum breiten Einleiten eines Speisestroms in die Heizschicht 7. Zu diesem Zweck sind die Sammelleiter 11, 12 auf der Heizschicht 7 angeordnet, wobei sich der erste Sammelleiter 11 entlang des oberen langen Scheibenrands 6a und der zweite Sammelleiter 12 entlang des unteren langen Scheibenrands 6a' erstreckt. Die beiden Sammelleiter 11, 12 bestehen aus einem gleichen Material und können beispielsweise durch Aufdrucken einer Silberdruckpaste auf die Heizschicht 7 beispielsweise im Siebdruckverfahren hergestellt werden. Alternativ wäre es auch möglich, die Sammelleiter 11, 12 aus schmalen Metallfolienstreifen beispielsweise aus Kupfer oder Aluminium herzustellen. Diese können beispielsweise auf der Klebeschicht 5 fixiert und beim Verbinden von Außen- und Innenscheibe 3, 4 auf der Heizschicht 7 angeordnet werden. Dabei kann durch die Einwirkung von Wärme und Druck beim Verbinden der Einzelscheiben 3, 4 ein elektrischer Kontakt gewährleistet werden.

Der erste Sammelleiter 11 ist über einen nicht näher dargestellten Anschlussleiter, der beispielsweise als Flachbandleiter (z.B. schmale Metallfolie) ausgebildet ist, und eine Stromleitung 19 mit dem einen Pol (beispielsweise Minuspol) einer Spannungsquelle 14 zum Bereitstellen einer Speisespannung verbunden. Gleichermaßen ist der zweite Sammelleiter 12 über einen ebenfalls nicht näher dargestellten Anschlussleiter und eine Stromleitung 19 mit dem anderen Pol (beispielsweise Pluspol) der Spannungsquelle 14 verbunden. Durch die beiden Sammelleiter 11, 12 wird ein Heizfeld 13 eingeschlossen, in dem bei Anlegen einer Speisespannung ein Heizstrom fließt. Bei der Spannungsquelle 14 kann es sich beispielsweise um eine Batterie bzw. Akkumulator, insbesondere um eine Fahrzeug-Batterie, oder um einen mit einer Batterie gekoppelten Transformator handeln. Vorzugsweise ist die Spannungsquelle 14 so ausgebildet, dass eine Speisespannung von mehr als 100 Volt, bereitgestellt wird, was insbesondere bei Batterien von Elektrofahrzeugen gegeben sein kann.

Die Anordnung 1 weist weiterhin eine Mehrzahl verteilt angeordneter Temperatursensoren 15 auf, wobei in Fig. 1 lediglich ein Temperatursensor 15 dargestellt ist. Die Temperatursensoren 15 sind beispielsweise auf der Außenseite der Außenscheibe 3 oder auf der Innenseite der Innenscheibe 4 angeordnet, wobei es gleichermaßen aber auch denkbar ist, die Temperatursensoren 15 zwischen den beiden Einzelscheiben 3, 4 anzuordnen. Durch die Mehrzahl Temperatursensoren 15 kann die Temperatur der Windschutzscheibe 2 erfasst werden. Dabei sind die Temperatursensoren 15 breit verteilt an der Windschutzscheibe 2 so angeordnet, dass insbesondere auch lokal unterschiedliche Scheibentemperaturen gut erfassbar sind. Typischer Weise verfügen Windschutzscheiben über eine eher geringe Wärmeleitfähigkeit. Lokale Temperaturunterschiede können beispielsweise durch Sonnenbestrahlung eines Teilbereichs der Windschutzscheibe 2 entstehen.

Vorteilhaft ist eine Mehrzahl Temperatursensoren 15 am Heizschichtrand 9 oder Scheibenrand 6 verteilt, vorzugsweise gleichmäßig verteilt, angeordnet, da Temperaturunterschiede am Scheibenrand 6 aufgrund hoher lokaler Spannungen mit einem relativ hohen Bruchrisiko bei einer Enteisung einher gehen. Beispielsweise ist an den vier Ecken der Windschutzscheibe 2 jeweils ein Temperatursensor 15, sowie am Scheibenrand 6 in der Mitte zwischen zwei eckständigen Temperatursensoren 15 jeweils ein Temperatursensor 15 angeordnet. Des Weiteren ist es vorteilhaft, wenn Temperatursensoren jeweils in den Scheibenbereichen angeordnet sind, in denen lokale Überhitzungen ("Hot Spots") auftreten können. Dies sind insbesondere heizschichtfreie Zonen, beispielsweise Kommunikationsfenster oder Endabschnitte von Trennlinien zur Strukturierung der Heizschicht 7.

Die Temperatursensoren 15 können in vielfältiger Weise ausgebildet sein, beispielsweise als Thermoelemente. In fertigungstechnischer Hinsicht ist es besonders vorteilhaft, wenn die Temperatursensoren 15 als Messschleifen ausgebildet sind, die auf die Scheibe, insbesondere auf die Heizschicht 7 gedruckt sind, welche dann von außen kontaktiert werden können. Dies ermöglicht die Temperatursensoren 15 aus einem gleichen Material (beispielsweise Silberdruckpaste) wie die beiden Sammelleiter 11, 12 herzustellen. Es ist lediglich zu gewährleisten, dass das Material der Messschleifen über einen temperaturempfindlichen, elektrischen Widerstand verfügt.

Die Temperatursensoren 15 sind jeweils über eine Datenleitung 17 mit einer mikroprozessorbasierten Kontrolleinrichtung 16 datentechnisch verbunden. Die Kontrolleinrichtung 16 ist weiterhin über eine Datenleitung 17 mit einer der Spannungsquelle 14 zugeordneten Schalt-/Wandeleinrichtung 18 verbunden, welche an die beiden Stromleitungen 20 angeschlossen ist und dazu dient, die Spannungsquelle 14 mit der Heizschicht 7 elektrisch zu verbinden oder von dieser zu trennen. Im vorliegenden Ausführungsbeispiel dient die Schalt-/Wandeleinrichtung 18 nicht nur zum Schalten der Speisespannung sondern auch zum Wandeln der Speisespannung. Die Schalt-/Wandeleinrichtung 18 ist zu diesem Zweck als Spannungswandler ausgebildet, um die von der Spannungsquelle 14 bereitgestellte Speisespannung zu erhöhen oder zu verringern. Die Schalt-/Wandeleinrichtung 18 und die Spannungsquelle 14 formen gemeinsam eine Spannungsversorgungseinrichtung für die Heizschicht 7 der Windschutzscheibe 2. Es versteht sich, dass die Schalt-/Wandeleinrichtung 18 auch als Schalteinrichtung ohne Spannungswandelfunktion ausgebildet sein kann. Ebenso ist möglich, dass die Schalt-/Wandeleinrichtung 18 in die Spannungsquelle 14 integriert ist.

Die Datenleitungen 17 können drahtgebunden oder drahtlos ausgeführt sein. Durch die Kontrolleinrichtung 16 und die durch die Datenleitungen 17 gekoppelten Einrichtungen wird ein Steuer- bzw. Regelkreis zum Enteisen der Windschutzscheibe 2 gebildet, wobei die von der Spannungsquelle 14 bereitgestellte Speise- bzw. Heizspannung auf Basis von Sensorsignalen des Temperatursensors 15 wahlfrei an die Heizschicht 7 angelegt und gegebenenfalls gewandelt werden kann. Die Kontrolleinrichtung 16 ist programmtechnisch so eingerichtet, dass das im Folgenden beschriebene Verfahren zum Enteisen der Windschutzscheibe 2 ausgeführt werden kann.

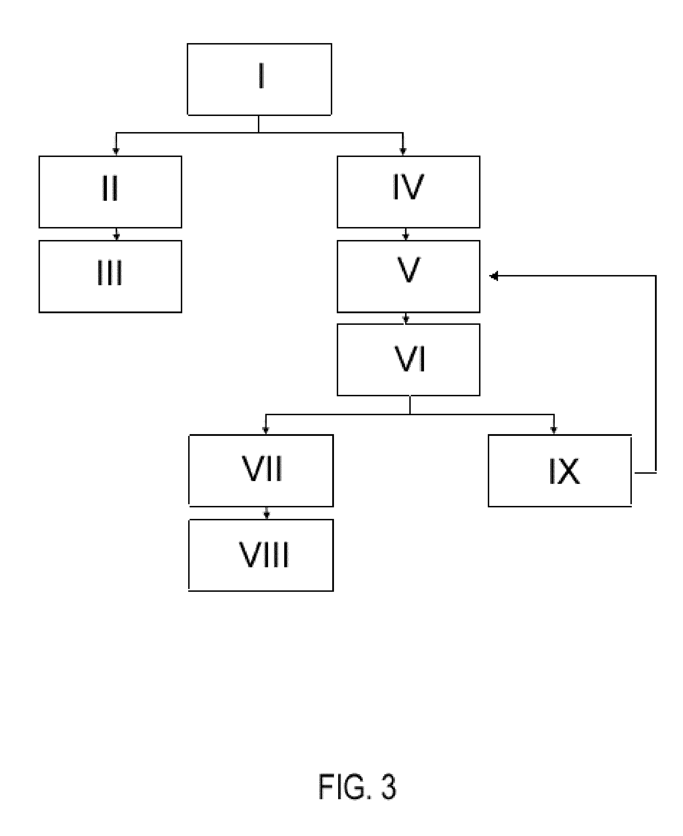

In Fig. 3 ist ein Fluss- bzw. Ablaufdiagram zur Veranschaulichung eines beispielhaften Verfahrens dargestellt. Ein konkreter Enteisungsvorgang zur Enteisung der Windschutzscheibe 2 wird hier manuell durch Betätigen eines (nicht dargestellten) Schaltelements in einer Bedienkonsole des Fahrzeugs aktiviert bzw. gestartet. Denkbar wäre aber auch, den Enteisungsvorgang automatisch zu starten, beispielsweise beim Anlassen des Motors und Erfassen einer niedrigen Außentemperatur unterhalb eines bestimmten Schwellwerts, beispielsweise 0°C, durch einen Außentemperatursensor. Für eine Aktivierung des Enteisungsvorgangs kann beispielsweise ein Startsignal manuell oder automatisch generiert werden.

Wurde ein Enteisungsvorgang aktiviert, wird noch vor dem erstmaligen Anlegen einer Heizspannung an die Heizschicht 7 die Temperatur T der Windschutzscheibe 2 durch die Temperatursensoren 15 gemessen (I). Falls die Temperatur T der Windschutzscheibe 2 an nur einem Temperatursensor 15 einen wählbaren unteren Temperaturschwellwert, hier beispielsweise 0°C, übersteigt (II), wird keine Heizspannung an die Heizschicht 9 angelegt und das Verfahren bzw. Enteisungsvorgang wird beendet (III). Zu diesem Zweck kann beispielsweise ein Stoppsignal erzeugt werden. Die Scheibenanordnung geht dann in einen Standby- bzw. Ruhezustand über. Falls alternativ die Temperatur T der Windschutzscheibe 2 dem unteren Temperaturschwellwert, hier beispielsweise 0°C, entspricht oder kleiner ist als der untere Temperaturschwellwert (IV), so wird die von der Spannungsquelle 14 bereitgestellte Speisespannung von mehr als 100 Volt, beispielsweise 118 Volt, für einen Zeitraum von beispielsweise 1 bis 120 Sekunden, insbesondere 30 bis 90 Sekunden, an die Heizschicht 7 angelegt (V).

Anschließend wird die Temperatur der Windschutzscheibe 2 nach Beginn der Heizperiode, d.h. nach Anlegen der Speisespannung, gemessen. Dies erfolgt beispielsweise in festlegbaren Zeitabständen beginnend mit dem Anlegen der Speisespannung, vorteilhaft in kontinuierlicher Weise. Alternativ wird die Temperatur der Windschutzscheibe 2 unmittelbar nach Ablauf der Zeitperiode des Anlegens der Speisespannung, d.h. nach einer Wartezeit von beispielsweise 1 bis 120 Sekunden, insbesondere 30 bis 90 Sekunden, durch die Temperatursensoren 15 gemessen (VI).

Falls die Temperatur T der Windschutzscheibe 2 an nur einem Temperatursensor 15 einem wählbaren oberen Temperaturschwellwert, hier beispielsweise 70°C, entspricht (VII), wird der Enteisungsvorgang beendet (VIII). Zu diesem Zweck kann beispielsweise ein Stoppsignal erzeugt werden. Die Scheibenanordnung geht dann in einen Standby- bzw. Ruhezustand über. Für den Fall, dass die Temperatur der Windschutzscheibe 2 noch während der Zeitperiode des Anlegens der Speisespannung gemessen wird, wird zu diesem Zweck die Speisespannung von der Heizschicht 7 durch die Schalt-/Wandeleinrichtung 18 getrennt. Falls die Temperatur T der Windschutzscheibe 2 kleiner ist als der obere Temperaturschwellwert (IX), hier beispielsweise 70°C, wird in Form einer Regelschleife die gleiche Heizspannung wie zuvor für die gleiche Zeitperiode an die Heizschicht 7 angelegt (V). Wiederum wird die Temperatur der Windschutzscheibe 2 nach Beginn der Heizperiode, d.h. nach Anlegen der Speisespannung gemessen. Dies kann wie zuvor beispielsweise in festlegbaren Zeitabständen beginnend mit dem Anlegen der Speisespannung, vorteilhaft in kontinuierlicher Weise, erfolgen. Alternativ wird die Temperatur der Windschutzscheibe 2 unmittelbar nach Ablauf der Zeitperiode des Anlegens der Speisespannung gemessen (VI), wobei dann auf Basis der gemessenen Temperatur der Enteisungsvorgang beendet oder abermals die Heizspannung angelegt wird, gemäß den unmittelbar vorstehenden Kriterien. Das Anlegen der Heizspannung (V) und Messen der Scheibentemperatur (VI) wird gegebenenfalls solange wiederholt bis die Temperatur der Windschutzscheibe 2 an zumindest einem Temperatursensor 15 dem oberen Schwellwert entspricht. Alternativ wäre auch denkbar, den Enteisungsvorgang auf eine maximale Anzahl von Heizperioden zu begrenzen. Schließlich geht die Anordnung 1 bis zum Start des nächsten Enteisungsvorgangs in einen Standby- bzw. Ruhezustand über, beispielsweise durch Erzeugen eines Stoppsignals.

In dem Ausführungsbeispiel kann die Dauer der ersten Heizperiode und die Heizspannung während der ersten Heizperiode in Abhängigkeit der zu Beginn des Enteisungsvorgangs gemessenen Scheibentemperatur eingestellt werden. Ebenso kann die Dauer jeder folgenden (zweiten, dritten...) Heizperiode und die Heizspannung während der folgenden Heizperioden in Abhängigkeit der unmittelbar vor Beginn der jeweiligen Heizperiode gemessenen Scheibentemperatur eingestellt werden. Vorteilhaft wird zur Einsparung elektrischer Heizleistung bei einer höheren Scheibentemperatur eine kürzere Heizperiode und bei einer niedrigeren Scheibentemperatur eine längere Heizperiode eingestellt. Vorteilhaft wird zur Einsparung elektrischer Heizleistung bei einer höheren Scheibentemperatur eine niedrigere Speisespannung, entsprechend einer geringeren elektrischen Leistung, und bei einer niedrigeren Scheibentemperatur eine höhere Speisespannung, entsprechend einer höheren elektrischen Leistung, eingestellt.

In dem Ausführungsbeispiel sind die Heizspannungen und die Heizperioden gleich. Entsprechend obigen Ausführungen wäre jedoch auch denkbar, dass die in der zweiten und den darauf folgenden Heizperioden an die Heizschicht 7 angelegte Speisespannung in Abhängigkeit der bei der vorausgegangenen Abfrage zu Grunde gelegten, gemessenen Scheibentemperatur eingestellt wird. Vorteilhaft wird zur Einsparung elektrischer Heizleistung bei einer höheren Scheibentemperatur eine niedrigere Heizspannung und bei einer niedrigeren Scheibentemperatur eine höhere Heizspannung durch die Schalt-/Wandeleinrichtung 18 eingestellt. Ebenso wäre denkbar, dass die Dauer der zweiten und darauf folgenden Heizperioden in Abhängigkeit der bei der vorausgegangenen Abfrage zu Grunde gelegten, gemessenen Temperatur der Windschutzscheibe 2 eingestellt werden. Vorteilhaft wird zur Einsparung von elektrischer Heizleistung bei einer höheren Scheibentemperatur eine kürzere Heizperiode und bei einer niedrigeren Scheibentemperatur eine längere Heizperiode eingestellt.

Wie bereits ausgeführt, wird vorzugsweise ein Heizspannung von mehr als 100 Volt, hier beispielsweise 118 Volt, für einen relativ kurzen Zeitraum von 1 bis 120 Sekunden, beispielsweise 30 bis 90 Sekunden, an die Heizschicht 7 angelegt, wodurch eine Enteisung der Windschutzscheibe 2 mit einer niedrigen elektrischen Verlustleistung erreicht werden kann. Vorzugsweise sind die Heizspannung und die Heizperiode so gewählt, dass eine Heizleistung von wenigstens 2 kW pro m² Scheibenfläche, insbesondere wenigstens 3 kW pro m² Scheibenfläche, erzeugt wird.

In der folgenden Tabelle sind in praktischen Versuchen gewonnene Messdaten beim Enteisen einer herkömmlichen Fahrzeug-Windschutzscheibe 2 in einer Klimakammer bei einer Umgebungstemperatur von -10°C dargestellt. Zu diesem Zweck wurde auf die Windschutzscheibe jeweils ein gleichartiger Eisfilm unter gleichen Bedingungen mit einer Luftbürste aufgebracht. Anschließend wurde die Scheibe mit dem obig beschriebenen Verfahren enteist.

**Tabelle**

| Versuch | P[W] | U[V] | t[s] | E[Wh] |
|---|---|---|---|---|
| Nr. 1 | 600 | 40 | 630 | 105 |
| Nr. 2 | 4720 | 118 | 60 | 79 |

Demnach wurde in einem ersten Versuch (Nr. 1) eine Speisespannung U von 40 Volt (V) für einen Zeitraum von 630 Sekunden (s) an die Heizschicht 7 der Windschutzscheibe 2 angelegt, wodurch eine vollständige Enteisung der Scheibe bewirkt wurde. Hierbei wurde eine elektrische Energie von 105 Wattstunden (Wh) verbraucht, entsprechend einer elektrischen Leistung von 600 Watt (W).

Anschließend wurde in einem zweiten Versuch (Nr. 2) eine Speisespannung U von 118 Volt (V) für einen Zeitraum von 60 Sekunden (s) an die Heizschicht 7 der Windschutzscheibe 2 angelegt, wodurch gleichermaßen eine vollständige Enteisung der Scheibe bewirkt wurde. Hierbei wurde eine elektrische Energie von nur 75 Wattstunden (Wh) verbraucht, entsprechend einer elektrischen Leistung von 4720 Watt (W).

Diese Versuche haben in überraschender Weise gezeigt, dass bei einer höheren Speisespannung und einer kürzeren Heizperiode deutlich weniger elektrische Energie verbraucht wird (in den beiden Versuchen ca. 25% weniger) und die elektrische Leistung um ein Vielfaches höher ist. Insbesondere kann bei einer gleichen elektrischen Arbeit durch Erzeugen einer höheren elektrischen Leistung für einen kürzeren Zeitraum eine Enteisung der Windschutzscheibe mit einer geringeren elektrischen Verlustleistung erreicht werden.

### Bezugszeichenliste

- 1: Scheibenanordnung
- 2: Windschutzscheibe
- 3: Außenscheibe
- 4: Innenscheibe
- 5: Klebeschicht
- 6: Scheibenrand
- 6a, 6a': langer Scheibenrand
- 6b, 6b': kurzer Scheibenrand
- 7: Heizschicht
- 8: Randstreifen
- 9: Heizschichtrand
- 10: Maskierungsstreifen
- 11: erster Sammelleiter
- 12: zweiter Sammelleiter
- 13: Heizfeld
- 14: Spannungsquelle
- 15: Temperatursensor
- 16: Kontrolleinrichtung
- 17: Datenleitung
- 18: Schalt-/Wandeleinrichtung
- 19: Stromleitung

## Patentansprüche

1. Verfahren zum Enteisen einer transparenten Scheibe mit einer elektrischen Heizeinrichtung, (7), welches auf Basis eines manuell oder automatisch gestarteten Enteisungsvorgangs die folgenden Schritte umfasst:
Schritt A): Messen der Scheibentemperatur vor erstmaligem Anlegen einer Heizspannung, wobei das Verfahren beendet wird, falls die Scheibentemperatur einen unteren Temperaturschwellwert übersteigt, oder eine Heizspannung von größer als 100 Volt an die Heizeinrichtung während einer Heizperiode von maximal 2 Minuten, angelegt wird, falls die Scheibentemperatur gleich oder geringer als der untere Temperaturschwellwert ist, wobei die Heizspannung und die Heizperiode so gewählt werden, dass eine Heizleistung von wenigstens 2 Kilowatt (kW) pro Quadratmeter (m²) Scheibenfläche, erzeugt wird, und Schritt B) ausgeführt wird, wobei die Dauer der Heizperiode in Abhängigkeit der in Schritt A) gemessenen Scheibentemperatur gewählt wird, wobei bei einer höheren Scheibentemperatur eine kürzere Heizperiode und bei einer niedrigeren Scheibentemperatur eine längere Heizperiode gewählt wird;
Schritt B): Messen der Scheibentemperatur nach Beginn der Heizperiode, wobei der Enteisungsvorgang beendet wird, falls die Scheibentemperatur einen oberen Temperaturschwellwert erreicht, oder Schritt C) durchgeführt wird, falls die Scheibentemperatur geringer als der obere Temperaturschwellwert ist;
Schritt C): Anlegen einer Heizspannung von größer als 100 Volt an die Heizeinrichtung während einer Heizperiode von maximal 2 Minuten, wobei die Heizspannung und die Heizperiode so gewählt werden, dass eine Heizleistung von wenigstens 2 Kilowatt (kW) pro Quadratmeter (m²) Scheibenfläche, erzeugt wird, und Wiederholen von Schritt B), wobei die Dauer der Heizperiode in Abhängigkeit der in Schritt B) gemessenen Scheibentemperatur gewählt wird, wobei bei einer höheren Scheibentemperatur eine kürzere Heizperiode und bei einer niedrigeren Scheibentemperatur eine längere Heizperiode gewählt wird.

2. Verfahren nach Anspruch 1, bei welchem die Scheibe (2) während einer Mehrzahl Heizperioden geheizt wird.

3. Verfahren nach einem der Ansprüche 1 bis 2, bei welchem die Heizperioden in Schritt A) und in Schritt C) eine gleiche Dauer haben.

4. Verfahren nach einem der Ansprüche 1 bis 3, bei welchem in Schritt A) die Größe der Heizspannung in Abhängigkeit der in Schritt A) gemessenen Scheibentemperatur gewählt wird, wobei bei einer höheren Scheibentemperatur eine niedrigere Heizspannung und bei einer niedrigeren Scheibentemperatur eine höhere Heizspannung gewählt wird.

5. Verfahren nach einem der Ansprüche 1 bis 4, bei welchem in Schritt C) die Größe der Heizspannung in Abhängigkeit der in Schritt B) gemessenen Scheibentemperatur gewählt wird, wobei bei einer höheren Scheibentemperatur eine niedrigere Heizspannung und bei einer niedrigeren Scheibentemperatur eine höhere Heizspannung gewählt wird.

6. Verfahren nach einem der Ansprüche 1 bis 5, bei welchem die Heizspannungen und Heizperioden in Schritt A) und in Schritt C) gleich groß sind.

7. Verfahren nach einem der Ansprüche 1 bis 6, bei welchem in Schritt B) die Scheibentemperatur unmittelbar nach Ablauf der Heizperiode gemessen wird.

8. Verfahren nach einem der Ansprüche 1 bis 7, bei welchem der untere Temperaturschwellwert 0°C ist.

9. Verfahren nach einem der Ansprüche 1 bis 8, bei welchem der obere Temperaturschwellwert im Bereich von 30°C bis 80°C, insbesondere im Bereich von 50°C bis 70°C, liegt und beispielsweise 70°C beträgt.

10. Scheibenanordnung (1), welche umfasst:
- eine transparente Scheibe (2), mit einer elektrischen Heizeinrichtung, insbesondere eine Heizschicht (7), die mit zumindest zwei zum Anschluss an eine Spannungsversorgungseinrichtung (14, 18) vorgesehene Elektroden (11, 12) so verbunden ist, dass durch Anlegen einer Heizspannung ein Heizstrom durch die Heizeinrichtung, (13), fließt,
- wenigstens ein Temperatursensor (15) zum Messen der Scheibentemperatur,
- eine mit dem Temperatursensor (15) und der Spannungsversorgungseinrichtung (14, 18) gekoppelte Kontrolleinrichtung (16), welche zur Durchführung eines Verfahrens nach einem der Ansprüche 1 bis 9 programmtechnisch eingerichtet ist.

11. Scheibenanordnung (1) nach Anspruch 10, bei welcher die Elektroden (11, 12) und der wenigstens eine Temperatursensor (15) auf die in Form einer Heizschicht (7) ausgebildete Heizeinrichtung im Druckverfahren aufgedruckt sind.

12. Scheibenanordnung (1) nach Anspruch 10 oder 11, bei welcher eine Mehrzahl Temperatursensoren (15) über den Scheibenrand (6) verteilt angeordnet sind.

13. Scheibenanordnung (1) nach einem der Ansprüche 10 bis 12, bei welcher in Scheibenbereichen, in denen eine lokale Überhitzung auftreten kann, beispielsweise Endabschnitte von Trennlinien oder heizschichtfreie Zonen, jeweils ein Temperatursensor (15) angeordnet ist.

## Claims

1. Method for de-icing a transparent window (2) with an electric heating device which comprises, on the basis of a manual or automatically initiated de-icing process, the following steps:
Step A): Measuring the window temperature before the initial application of a heating voltage, wherein the method is terminated if the window temperature exceeds a lower temperature threshold value, or a heating voltage of more than 100 volts is applied to the heating device over a heating period of a maximum of 2 minutes, if the window temperature is equal to or less than the lower temperature threshold value, wherein the heating voltage and the heating period are selected such that a heating power of at least 2 kilowatts (kW) per square meter (m²) of window area is generated, and step B) is executed, wherein in step A) the duration of the heating period is selected as a function of the window temperature measured in step A), with a shorter heating period selected in the case of a higher window temperature and a longer heating period selected in the case of a lower window temperature.
Step B): Measuring the window temperature after the beginning of the heating period, wherein the de-icing process is terminated if the window temperature reaches an upper temperature threshold value, or step C) is carried out if the window temperature is lower than the upper temperature threshold value;
Step C): Applying a heating voltage of more than 100 volts to the heating device over a heating period of a maximum of 2 minutes with the heating voltage and the heating period selected such that a heating power of at least 2 kilowatts (kW) per square meter (m²) of window area is generated, and repeating step B), wherein in step C) the duration of the heating period is selected as a function of the window temperature measured in step B), with a shorter heating period selected in the case of a higher window temperature and a longer heating period selected in the case of a lower window temperature.

2. Method according to claim 1, wherein the window (2) is heated during a plurality of heating periods.

3. Method according to one of claims 1 through 2, wherein the heating periods in step A) and in step C) have equal duration.

4. Method according to one of claims 1 through 3, wherein in step A) the quantity of the heating voltage is selected as a function of the window temperature measured in step A), with a lower heating voltage selected in the case of a higher window temperature and a higher heating voltage selected in the case of a lower window temperature.

5. Method according to one of claims 1 through 4, wherein in step C) the quantity of the heating voltage is selected as a function of the window temperature measured in step B), with a lower heating voltage selected in the case of a higher window temperature and a higher heating voltage selected in the case of a lower window temperature.

6. Method according to one of claims 1 through 5, wherein the heating voltages and heating periods in step A) and in step C) are equal.

7. Method according to one of claims 1 through 6, wherein in step B) the window temperature is measured immediately after expiration of the heating period.

8. Method according to one of claims 1 through 7, wherein the lower temperature threshold value is 0 °C.

9. Method according to one of claims 1 through 8, wherein the upper temperature threshold value is in the range from 30 °C to 80 °C, in particular in the range from 50 °C to 70 °C, and is, for example, 70 °C.

10. Window arrangement (1), which comprises:
- a transparent window (2) with an electric heating device which is connected to at least two electrodes (11, 12) provided for connection to a voltage supply device (14, 18) such that by applying a heating voltage, a heating current flows through the heating device, in particular a heating field (13), formed between the electrodes,
- at least one temperature sensor (15) for measuring the window temperature,
- a control device (16) coupled with the temperature sensor (15) and the voltage supply device (14, 18), which is programmably suitably configured to carry out a method according to one of claims 1 through 9.

11. Window arrangement (1) according to claim 10, wherein the electrodes (11, 12) and the at least one temperature sensor (15) are printed onto the heating device implemented in the form of a heating layer (7) using a printing technique.

12. Window arrangement (1) according to claim 10 or 11, wherein a plurality of temperature sensors (15) are distributedly disposed over the window edge (6).

13. Window arrangement (1) according to one of claims 10 through 12, wherein a temperature sensor (15) is, in each case, disposed in window regions in which local overheating can occur, for example, end sections of separating lines or heating-layer-free zones.

## Revendications

1. Procédé de dégivrage d'une vitre transparente avec un dispositif de chauffage électrique (7), qui comprend les étapes suivantes sur la base d'une opération de dégivrage démarrée manuellement ou automatiquement :
étape A) : mesure de la température de la vitre avant l'application d'une tension de chauffage initiale, où le procédé est arrêté si la température de la vitre dépasse un seuil minimal de température, ou un une tension de chauffage supérieure à 100 volts est appliquée au dispositif de chauffage pendant une période de chauffe maximale de 2 minutes, si la température de la vitre est égale ou inférieure au seuil de température inférieur, où la tension de chauffage et la période de chauffe sont sélectionnées afin de produire une puissance de chauffage d'au moins 2 kilowatts (kW) par mètre carré (m²) de la surface de la vitre et l'étape B) est exécutée, où la durée de la période de chauffe sera choisie en fonction de la température de la vitre mesurée lors de l'étape A), où respectivement à une température de la vitre plus élevée une période de chauffe plus courte et à une température moins élevée une période de chauffe plus longue est sélectionnée;
étape B) : mesure de la température de la vitre selon le début de la période de chauffe, où l'opération de dégivrage est arrêté si la température de la vitre atteint un seuil de température supérieure, ou l'étape C) est exécutée, et si la température de la vitre est inférieure au seuil de température supérieure ;
étape C) : application d'une tension de chauffage initiale supérieure à 100 volts au dispositif de chauffage pendant une période de chauffe maximale de 2 minutes, où la tension de chauffage et la période de chauffe sont sélectionnées, afin de produire une puissance de chauffage d'au moins 2 kilowatts (kW) par mètre carré (m²) de la surface de la vitre et répéter l'étape B), où la durée de la période de chauffe est sélectionnée en fonction de la température de la vitre mesurée lors de l'étape B), où respectivement à une température de la vitre plus élevée une période de chauffe plus courte et à une température moins élevée une période de chauffe plus longue est sélectionnée.

2. Procédé selon la revendication 1, où la vitre (2) est chauffée pendant une majorité de périodes de chauffe.

3. Procédé selon l'une des revendications 1 ou 2, où la période de chauffe de l'étape A) et l'étape C) sont de la même durée.

4. Procédé selon l'une des revendications 1 à 3, où lors de l'étape A) la valeur de la tension de chauffage est sélectionnée en fonction de la température de la vitre mesurée à l'étape A) où respectivement à une température de la vitre plus élevée une période de chauffe plus courte et à une température moins élevée une période de chauffe plus longue est sélectionnée.

5. Procédé selon l'une des revendications 1 à 4, où lors de l'étape C) la valeur de la tension de chauffage est sélectionnée en fonction de la température de la vitre mesurée à l'étape B) respectivement à une température de la vitre plus élevée une période de chauffe plus courte et à une température moins élevée une période de chauffe plus longue est sélectionnée.

6. Procédé selon l'une des revendications 1 à 5, où la valeur de la tension de chauffage et la durée de la période de chauffe lors de l'étape A) et l'étape C) sont égales.

7. Procédé selon l'une des revendications 1 à 6, où lors de l'étape B) la température de la vitre est mesurée immédiatement après la période de chauffe.

8. Procédé selon l'une des revendications 1 à 7, où le seuil de température inférieur est de 0°C.

9. Procédé selon l'une des revendications 1 à 8, où le seuil de température supérieur est compris dans la gamme de 30°C à 80°C, en particulier entre 50°C et 70°C et, par exemple, 70°C.

10. Ensemble de vitres (1), qui comprend :-
- une vitre transparente (2) avec un dispositif de chauffage électrique, en particulier une couche de chauffage (7), qui est reliée à au moins deux électrodes (11, 12) prévues pour le raccordement à un dispositif d'alimentation en tension (14, 18) de telle manière que par l'application d'une tension, un courant de chauffage circule à travers le dispositif de chauffage (13);
- au moins un capteur de température (15) pour mesurer la température de la vitre,
- un dispositif de commande (16) couplé avec la sonde de température (15) et le dispositif d'alimentation en tension (14, 18), qui est configuré par programme pour la réalisation d'un procédé selon l'une des revendications 1 à 9.

11. Ensemble de vitres (1) selon la revendication 10, où les électrodes (11, 12) et ledit au moins un capteur de température (15) sont imprimées sur le dispositif de chauffage sous forme d'une couche de chauffage (7) par un procédé d'impression.

12. Ensemble de vitres (1) selon l'une des revendications 10 ou 11, où une majorité des capteurs de température (15) sont disposés distribués sur le bord de la vitre (6).

13. Ensemble de vitres (1) selon l'une des revendications 10 à 12, où un capteur de température (15) est disposé respectivement dans les régions de la vitre où une surchauffe locale peut survenir, tels que les extrémités des lignes de séparation ou des zones dépourvues de couche de chauffage.
